# EUROPEAN PATENT SPECIFICATION

(11) **EP 2 743 135 B1**
(45) Date of publication and mention of the grant of the patent: **29.07.2015**
(21) Application number: 13197894.2
(22) Date of filing: 17.12.2013
(51) Int. Cl.: B60R 1/04

(54) **Connection arm for coupling a rear view mirror to a supporting element fixed to a windscreen**
Verbindungsarm zur Kopplung eines Rückspiegels an ein Halteelement an einer Windschutzscheibe
Bras de connexion permettant de coupler un rétroviseur à un élément de support fixé à un pare-brise

(30) Priority: 17.12.2012 IT TO20121088
(43) Date of publication of application: 18.06.2014
(73) Proprietor: Fiat Group Automobiles S.p.A., 10135 Torino (TO) (IT)
(72) Inventor: Chieppa, Sara, 10135 TORINO (IT); Nocerino, Antonio, 10135 TORINO (IT)
(74) Representative: Lovino, Paolo

(56) References cited:
- EP-A2- 1 312 507
- WO-A1-03/024745
- WO-A1-2011/103901
- JP-A- 2003 118 486
- US-A1- 2002 088 916

## Description

The present invention relates to a connection arm for coupling a rear view mirror to a supporting element fixed to a windscreen.

As is known, motor vehicles are provided, in their passenger compartment, with a rear view mirror fixed to the windscreen by means of a coupling device normally formed by two elements.

The first element is a supporting element having a plate, facing and fixed to the inner surface of the windscreen. A "button" projects orthogonally from the plate. This button has a substantially hexagonal or trilobed profile and defines a seat for the coupling of a spring.

The second element is an arm, which is defined by a body made in one piece of metallic material and, at one end, houses a joint for coupling of the rear view mirror. At the opposite end of the arm, the aforesaid spring is fixed by means of screws. This spring has three elastic wings, which are arranged at 120° from one another and couple to the respective lobes of the button. In particular, during assembly, the arm is placed axially against the plate, arranging the wings of the spring in alternate positions to the lobes of the button, and is then rotated so as to couple the three wings to the respective lobes. The rotation is by about 60° and terminates when a tooth of the arm snaps into a corresponding retention seat produced along the edge of the plate. In this way, the lobes of the button axially constrain the arm, while the retention seat of the plate prevents the arm from rotating. The anti-rotation system obtained on the arm must be durable over time to enable repeated assembly cycles in the event of assistance or maintenance. Therefore, the need to produce it in metallic material is understood.

Document JP2003-118486 discloses a connection arm for coupling a rear view mirror to a supporting element fixed to a windscreen; the connection arm compnising: an elongated shank, made of plastic material and comprising a first and a second terminal portion, opposite to each other; said first terminal portion having joint means for connecting said rear view mirror to said shank; and a plurality of elastic wings, arranged angularly apart from one another about an axis and adapted to be coupled to respective lobes defining part of said supporting element. Solutions of the type described above are widely used, but have some drawbacks. The main drawback lies in the fact that the choice of material of the arm implies relatively high suspended masses, due to the specific weight of the metallic material. In fact, in the event of an accident, this mass is subjected to the acceleration that occurs during the impact and tends to release the arm from the button, endangering the occupants of the motor vehicle. In other words, release is essentially caused by the high inertial forces acting on the arm in the event of an accident: by making the arm rotate in the opposite direction to the direction with which it was mounted, these forces cause the tooth to be released from the retention seat of the plate, immediately followed by extraction of the elastic wings from the respective lobes.

Secondly, prior art solutions of the type described above are relatively costly to produce, above all for the raw material, which is relatively high quality and necessarily implies a somewhat expensive painting process to make the arm aesthetically pleasing. Moreover, moulds for metallic materials are generally complex. Therefore, the provision of rear view mirrors with painted metallic arms requires substantial investments and relatively high costs for each piece.

It is also important to stress that each arm must be designed with different dimensions and shapes for each vehicle, as a function of the position that has been established for the rear view mirror in the passenger compartment, of aesthetic requirements of the passenger compartment and of the specifications of strength to be satisfied. Consequently, different moulds are necessary to define the shape of the respective metallic arms, which, as described above, require more substantial investments.

A theoretical solution to these drawbacks could be that of producing the arm made of plastic material, lighter and less costly: however, this solution would not satisfy the technical requirements of durability over time described above.

The object of the present invention is to produce a connection arm for coupling a rear view mirror to a supporting element fixed to a windscreen, which makes it possible to overcome, in a simple and inexpensive way, the aforesaid drawbacks, without compromising the functionality of the coupling of the arm to the supporting element.

According to the present invention, there is produced a connection arm for coupling a rear view mirror to a supporting element fixed to a windscreen, as defined in claim 1.

For better understanding of the present invention, a preferred embodiment will now be described purely by way of non-limiting example, with reference to the accompanying figures, wherein:
- Fig. 1 is a perspective view showing a preferred embodiment of the connection arm for coupling a rear view mirror to a supporting element fixed to a windscreen according to the present invention;
- Fig. 2 shows a perspective and exploded view of the connection arm of Fig. 1; and
- Figs. 3 and 4 show, with parts removed for clarity, respective sections of the connection arm, obtained according to the lines III-III and IV-IV indicated in Fig. 2.

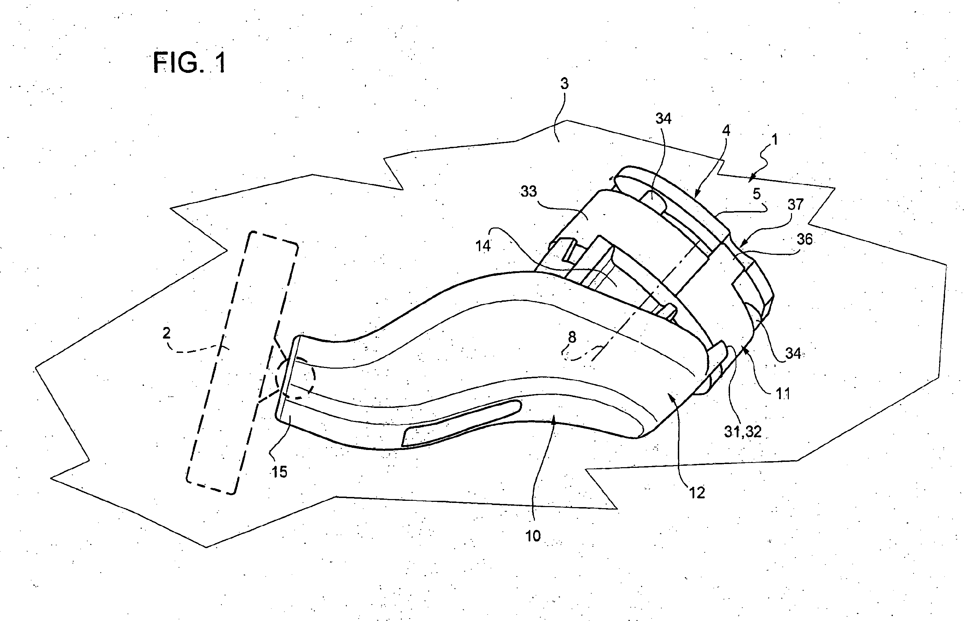

In Fig. 1, the reference numeral 1 indicates a connection device, which couples a rear view mirror 2 (schematically illustrated with a broken line) to a windscreen 3 (partly illustrated) inside the passenger compartment of a motor vehicle.

The device 1 comprises a supporting element 4, of known type, made of metallic material and, in turn, comprising a plate 5, which is facing and fixed to the inner surface 6 of the windscreen 3, for example by gluing.

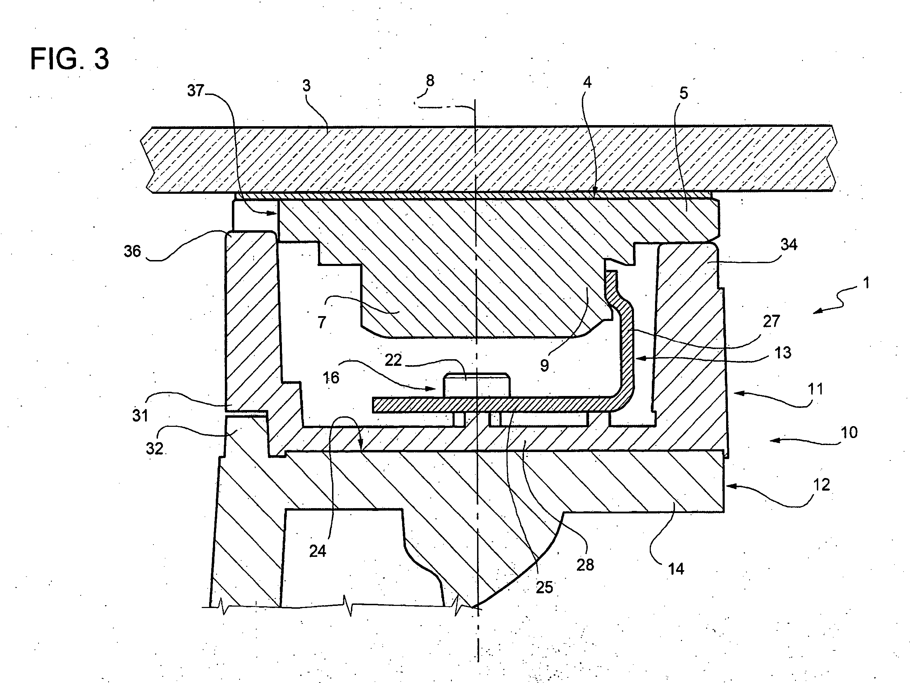

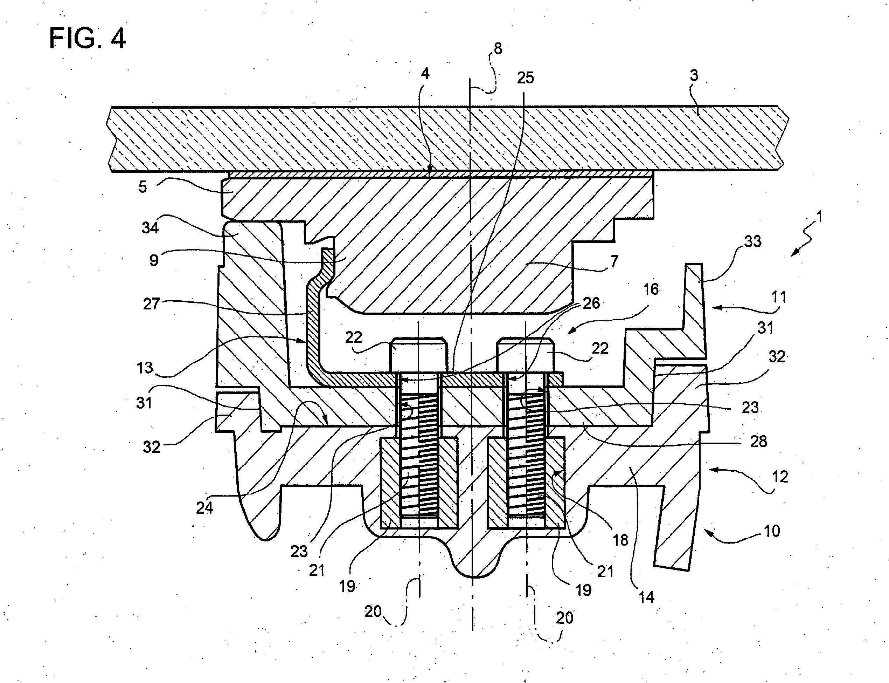

As shown in Figs. 3 and 4, the supporting element 4 also comprises a pin 7, generally called "button", protruding from the plate 5 in the opposite direction to the windscreen 3 along an axis substantially orthogonal to the plate 5 and to the windscreen 2 and having a polygonal profile, comprising a plurality of lobes 9, preferably 3 in number, arranged apart from one another around the axis 8 and defining respective coupling portions. The button 7 can be made in one piece with the plate 5 or can be a separate piece fixed to said plate 5.

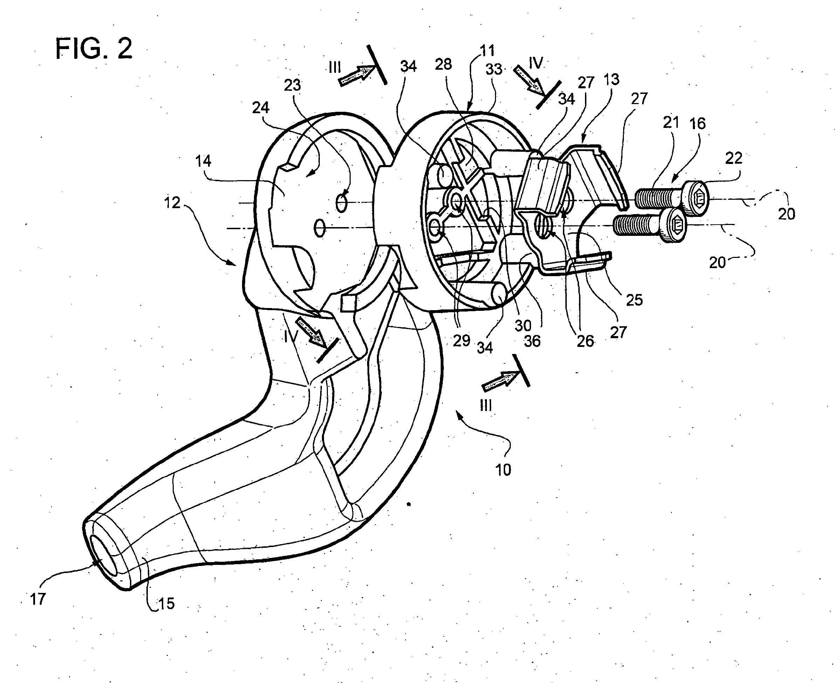

With reference to Fig. 2, the device 1 also comprises a connection arm 10, which is constituted by at least two pieces, one of which is defined by an interface 11 made of metallic material, fixed to the supporting element 4 by means of an elastic element 13, while the other piece is defined by an elongated shank 12 made of plastic material.

The shank 12 extends in a cantilever manner from the interface 11 on the opposite side with respect to the position of the elastic element 13 and terminates with two opposite portions 14, 15: the portion 14 is coaxial to the interface 11 along the axis 8 and is fixed to the interface 11, for example by means of one or more screws 16; the portion 15 instead defines a joint, to which the rear view mirror 2 is coupled in a known way, not illustrated. In the particular example described, the portion 15 defines a seat 17 adapted to house a spherical head defining part of the rear view mirror. Alternatively, the portion 15 can be defined by a spherical head that engages a seat of the rear view mirror.

With reference to the section of Fig. 4, preferably, the portion 14 has, for each screw 16, a related inner seat 18, in which a corresponding nut screw 19 made of metallic material is embedded. The nut screws 19 extend along respective axes 20 parallel to the axis 8 and are fixed with respect to the shank 12, to be able to screw the threaded stems 21 of the screws 16 and axially clamp a portion of the interface 11 between the shank 12 and the head 22 of the screws 16.

In particular, the plastic material of the shank 12 is overmoulded on the outer surface of the nut screws 19, so as to leave two holes 23 which are produced on one face 24 resting axially against the interface 11 and are coaxial with the nut screws 19 so as to define respective inlets into which to insert the stems 21 during mounting.

Preferably, as well as fixing the shank 12, the screws 16 also fix the elastic element 13 to the interface 11. In particular, the elastic element 13 comprises a plate portion 25, which is clamped axially between the interface 11 and the heads 22 and has two holes 26 through which the stems 21 pass.

With reference to Fig. 2, the elastic element 13 comprises, for each lobe 9, a respective wing 27. The wings 27 extend in a cantilever manner from the plate portion 27, are arranged apart from one another about the axis. 8 by the same angles provided between the lobes 9, and are coupled to said lobes (Figs. 3 and 4).

Again with reference to Fig. 4, preferably the interface 11 comprises a base 28, which is resting against the face 24 on one side and against the plate portion 25 on the other side, and has two holes 29 coaxial with the holes 24 and 26 and through which the stems 21 pass. Preferably, the base 28 has notches and/or projections 31, which are axially engaged in corresponding projections/notches 32 produced in the portion 14, so as to define a relative angular positioning system which, during assembly, angularly constrains the interface 11 to the shank 12 about the axis 8 in a predetermined position before fixing the interface 11 to the shank 12 by means of the screws 16.

The interface 11 also comprises a side wall 33, which extends in a cantilever manner from the perimeter edge of the base 28 in a direction substantially parallel to the axis 8 towards the plate 5 so as to surround the elastic element 13.

As shown in Fig. 2, from the axial part opposite with respect to the portion 14, the interface 11 has a reference seat 30, defined preferably by ribs that protrude from the base 28. The reference seat 30 houses the plate portion 25 and has shape and dimensions such as to position the elastic element 13 in a unique position with respect to the base 28.

With reference to Figs. 2 and 3, the interface 11 comprises a plurality of pins 34, which protrude with respect to the end edge of the wall 33 in directions substantially parallel to the axis 8 and are arranged to abut axially against the plate 5. The interface 11 also comprises a tooth 36 that protrudes with respect to the end edge of the wall 33 in a direction substantially parallel to the axis 8, by a greater length with respect to the length by which the pins 34 protrude, and engages a corresponding retention seat 37 produced along the edge of the plate 5. In this way, the retention seat 37 prevents the connection arm 10 from rotating about the axis 8. Preferably, the edge of the plate 5 has at least two retention seats 37 arranged angularly apart from one another.

The connection arm 10 is assembled simply by arranging the interface 11 between the portion 14 and the elastic element 13, positioning the interface 11 angularly with respect to the shank 12 so as to engage the projections/notches 31, 32 and screwing the screws 16 into the nut screws 19. The connection arm 10 is then mounted on the supporting element 4, first resting the interface 11 axially against the plate 5, with the wings 27 arranged in alternate positions to the lobes 9, and then rotating the connection arm 10 about the axis 8 so as to couple the wings 27 to the respective lobes 9. Rotation terminates when the tooth 36 snaps into the retention seat 37. At the end of rotation, which is by approximately 60°, the pins 34 remain axially forced against the plate 5, due to the elastic force axially exerted by the wings 27; the lobes 9 axially retain the wings 27 and, therefore, the interface 11; and the retention seat 37 prevents the interface 11 from rotating.

The connection arm 10 as a whole is relatively light, as one part thereof, i.e. the shank 12, is made of plastic material. Therefore the inertial forces acting on the connection arm 10 are relatively low and consequently do not cause disengagement of the tooth 36 from the retention seat 37 in the event of an accident and/or disengagement of the wings 27 from the respective lobes 9.

Simultaneously, the coupling precision of the connection arm 10 to the supporting element 4 is guaranteed by the fact that both the supporting element 4 and the interface 11 are made of metallic material. In fact, with metallic materials in the coupling areas, the dimensional tolerances, the deformability of the pieces and therefore the coupling plays are relatively low. At the same time, the strength of the components is relatively high, and therefore the risks of vibrations, defects and/or breakage are extremely low.

Moreover, being produced in two pieces, it is possible to use the same interface 11 for different types of motor vehicles and, therefore, to standardize the production of a component to be mounted on a series of different motor vehicles. In fact, for these motor vehicles it is sufficient to modify the conformation and/or the dimensions of the shank 12 and, therefore, to use injection moulds for different types of plastic materials for different shanks, while using a single mould for metal material for the interface 11, which remains common for all motor vehicles. In this way, a consistent reduction in costs is also obtained by varying the moulds for plastic materials and not the mould for metal materials.

Further, the use moulds for plastic materials to produce the shank 12 offers greater freedom in the design and production of atypical shapes, for example to satisfy particular aesthetic requirements.

Finally, from the above it is evident that modifications and variants can be made to the connection arm 10 described without departing from the scope of protection of the present invention, as defined in the appended claims.

In particular, the shank 12 could have different shapes to that illustrated by way of example, and/or could be constituted by several pieces made of plastic material, fixed to one another.

Moreover, the wings 27 could be made in one piece with the interface 11, in order to limit the number of components; and/or the shank 12 could be fixed to the interface 11 could be obtained in a different way than screws 16, for example by gluing, or by means of an interlocking or snap coupling of non-releasable type and resistant to the stresses to which the connection arm 10 is normally subjected.

## Claims

1. A connection arm (10) for coupling a rear view mirror (2) to a supporting element (4) fixed to a windscreen (3); the connection arm being **characterized by** comprising:
- an elongated shank (12), made of plastic material and comprising a first and a second terminal portion (14,15), opposite to each other; said first terminal portion (15) having joint means (17) for connecting said rear view mirror (2) to said shank (12);
- an interface (11), which is made in one piece of metallic material;
- a plurality of elastic wings (27) fixed with respect to said interface (11), arranged angularly apart from one another about an axis (8) and adapted to be coupled to respective lobes (9) defining part of said supporting element (4); said interface (11) comprising a portion arranged axially between said elastic wings (27) and said second terminal portion (14);
- connection means (16,31,32) which fix said second terminal portion to said interface.

2. A connection arm according to claim 1, **characterized in that** said connection means comprise axial fastening means (16) which axially fix said second terminal portion (14) against said interface (11).

3. A connection arm according to claim 2, **characterized in that** said axial fastening means (16) comprise at least one screw (16).

4. A connection arm according to claim 3, **characterized in that** said elastic wings (27) constitute part of an elastic element (13), which is distinct from said interface (11) and is fixed to said interface (11) by means of said screw (16).

5. A connection arm according to claim 3 or 4, **characterized by** comprising at least one nut screw (19) made of metallic material and embedded in said second terminal portion (14); said screw (16) having a threaded stem (21) screwed into said nut screw (19).

6. A connection arm according to any one of the claims from 2 to 5, **characterized in that** said connection means (16,31,32) comprise angular positioning means (31,32) for arranging said interface (11) in a predetermined relative position about said axis (8) with respect to said second terminal portion (14) before fixing said interface (11) to said second terminal portion (14) by means of said axial fastening means (16).

7. A connection arm according to any one of the preceding claims, **characterized in that** said interface (11) comprises:
- a base (28) axially resting against said second terminal portion (14), and
- a side wall (33), which extends in cantilever manner from the peripheral edge of said base (28) in direction substantially parallel to said axis (8) so as to surround said wings (27).

8. A connection arm according to claim 7, **characterized in that** said interface (11) further comprises a plurality of pins (34), which protrude from an end edge of said side wall (33) in directions substantially parallel to said axis (8).

9. A connection arm according to claim 8, **characterized in that** said interface (11) further comprises an angular retention tooth (36), which axially protrudes from said end edge in a direction substantially parallel to said axis (8) by a length longer than the protrusion of said pins (34).

10. A connection device (1) for connecting a rear view mirror (2) to a windscreen (3), comprising:
- a supporting element (4) comprising a plate (5) adapted to be fixed to an inner surface (6) of said windscreen (3), and a pin (7), which protrudes from said plate (5) along an axis (8) substantially orthogonal to said plate (5) and has a profile comprising a plurality of lobes (9); and
- a connection arm (10) made according to any one of the preceding claims.

## Patentansprüche

1. Verbindungsarm (10) zum Verbinden eines Rückspiegels (2) mit einem Tragelement (4), das an einer Windschutzscheibe (3) befestigt ist; wobei der Verbindungsarm **dadurch gekennzeichnet ist, dass** er Folgendes aufweist:
- einen langgestreckten Schaft (12), der aus Plastikmaterial gemacht ist und einen ersten und einen zweiten Endteil (14, 15) aufweist, die einander gegenüberliegen; wobei der erste Endteil (15) Verbindungsmittel (17) zur Verbindung des Rückspiegels (2) mit dem Schaft (12) hat;
- eine Schnittstelle (11), die aus einem Teil aus Metallmaterial gemacht ist;
- eine Vielzahl von elastischen Flügelelementen (27), die bezüglich der Schnittstelle (11) festgelegt sind, die um eine Achse (8) in Winkelrichtung voneinander getrennt angeordnet sind und geeignet sind, um mit jeweiligen Ansätzen (9) gekoppelt zu werden, welche einen Teil des Tragelementes (4) bilden; wobei die Schnittstelle (11) einen Teil aufweist, der axial zwischen den elastischen Flügelelementen (27) und dem zweiten Endteil (14) angeordnet ist;
- Verbindungsmittel (16, 31, 32), die den zweiten Endteil an der Schnittstelle befestigen.

2. Verbindungsarm nach Anspruch 1, **dadurch gekennzeichnet, dass** die Verbindungsmittel Axialbefestigungsmittel (16) aufweisen, die axial den zweiten Endteil (14) an der Schnittstelle (11) befestigten.

3. Verbindungsarm nach Anspruch 2, **dadurch gekennzeichnet, dass** die Axialbefestigungsmittel (16) zumindest eine Schraube (16) aufweisen.

4. Verbindungsarm nach Anspruch 3, **dadurch gekennzeichnet, dass** die elastischen Flügelelemente (27) einen Teil eines elastischen Elementes (13) bilden, welches von der Schnittstelle (11) getrennt ist und an der Schnittstelle (11) mittels der Schraube (16) befestigt ist.

5. Verbindungsarm nach Anspruch 3 oder 4, **dadurch gekennzeichnet, dass** er zumindest eine Schraubenmutter (19) aufweist, die aus Metallmaterial gemacht ist und in dem zweiten Endteil (14) eingebettet ist; wobei die Schraube (16) einen Schraubenschaft (21) hat, der in die Schraubenmutter (19) eingeschraubt wird.

6. Verbindungsarm nach einem der Ansprüche 2 bis 5, **dadurch gekennzeichnet, dass** die Verbindungsmittel (16, 31, 32) Winkelpositionierungsmittel (31, 32) aufweisen, um die Schnittstelle (11) in einer vorbestimmten Relativposition um die Achse (8) bezüglich des zweiten Endteils (14) anzuordnen, bevor die Schnittstelle (11) an dem zweiten Endteil (14) mittels der Axialbefestigungsmittel (16) festgelegt wird.

7. Verbindungsarm nach einem der vorhergehenden Ansprüche, **dadurch gekennzeichnet, dass** die Schnittstelle (11) Folgendes aufweist:
- eine Basis (28), die axial an dem zweiten Endteil (14) ruht, und
- eine Seitenwand (33), die sich vorstehend von der Umfangskante der Basis (28) erstreckt, und zwar in der Richtung im Wesentlichen parallel zur Achse (8), so dass sie die Flügelelemente (27) umgibt.

8. Verbindungsarm nach Anspruch 7, **dadurch gekennzeichnet, dass** die Schnittstelle (11) weiter eine Vielzahl von Stiften (34) aufweist, die von einer Endkante der Seitenwand (33) in Richtungen im Wesentlichen parallel zur Achse (8) vorsteht.

9. Verbindungsarm nach Anspruch 8, **dadurch gekennzeichnet, dass** die Schnittstelle (11) weiter einen Winkelhaltezahn (36) aufweist, der axial von der Endkante in einer Richtung im Wesentlichen parallel zur Achse (8) um eine größere Länge vorsteht als der Vorsprung der Stifte (34).

10. Verbindungsvorrichtung (1) zur Verbindung eines Rückspiegels (2) mit einer Windschutzscheibe (3), die Folgendes aufweist:
- ein Tragelement (4), welches eine Platte (5) aufweist, die eingerichtet ist, um an einer Innenfläche (6) der Windschutzscheibe (3) befestigt zu werden, und einen Stift (7), der von der Platte (5) entlang einer Achse (8) im Wesentlichen senkrecht zur Platte (5) vorsteht und ein Profil hat, welches eine Vielzahl von Ansätzen (9) aufweist; und
- einen Verbindungsarm (10), der nach einem der vorhergehenden Ansprüche ausgeführt ist.

## Revendications

1. Bras de raccordement (10) pour coupler un rétroviseur (2) à un élément de support (4) fixé sur un pare-brise (3) ; le bras de raccordement étant **caractérisé en ce qu'**il comprend :
- une tige allongée (12) réalisée à partir de matière plastique et comprenant une première et une seconde parties terminales (14, 15) opposées entre elles ; ladite première partie terminale (15) ayant des moyens d'assemblage (17) pour raccorder ledit rétroviseur (2) à ladite tige (12) ;
- une interface (11) qui est réalisée en une seule pièce de matériau métallique ;
- une pluralité d'ailes élastiques (27) fixes par rapport à ladite interface (11), agencées de manière angulaire à distance les unes des autres autour d'un axe (8) et adaptées pour être couplées aux lobes (9) respectifs définissant une partie dudit élément de support (4) ; ladite interface (11) comprenant une partie agencée de manière axiale entre lesdites ailes élastiques (27) et ladite seconde partie terminale (14);
- des moyens de raccordement (16, 31, 32) qui fixent ladite seconde partie terminale à ladite interface.

2. Bras de raccordement selon la revendication 1, **caractérisé en ce que** lesdits moyens de raccordement comprennent des moyens de fixation axiaux (16) qui fixent axialement ladite seconde partie terminale (14) contre ladite interface (11).

3. Bras de raccordement selon la revendication 2, **caractérisé en ce que** lesdits moyens de fixation axiaux (16) comprennent au moins une vis (16).

4. Bras de raccordement selon la revendication 3, **caractérisé en ce que** lesdites ailes élastiques (27) font partie d'un élément élastique (13) qui est distinct de ladite interface (11) et est fixé à ladite interface (11) au moyen de ladite vis (16).

5. Bras de raccordement selon la revendication 3 ou 4, **caractérisé en ce qu'**il comprend au moins une vis à écrou (19) réalisée avec un matériau métallique et encastrée dans ladite seconde partie terminale (14) ; ladite vis (16) ayant une tige filetée (21) vissée dans ladite vis à écrou (19).

6. Bras de raccordement selon l'une quelconque des revendications 2 à 5, **caractérisé en ce que** lesdits moyens de raccordement (16, 31, 32) comprennent des moyens de positionnement angulaire (31, 32) pour agencer ladite interface (11) dans une position relative prédéterminée autour dudit axe (8) par rapport à ladite seconde partie terminale (14) avant de fixer ladite interface (11) sur ladite seconde partie terminale (14) au moyen desdits moyens de fixation axiaux (16).

7. Bras de raccordement selon l'une quelconque des revendications précédentes, **caractérisé en ce que** ladite interface (11) comprend :
- une base (28) s'appuyant axialement contre ladite seconde partie terminale (14), et
- une paroi latérale (33) qui s'étend en porte-à-faux à partir du bord périphérique de ladite base (28) en direction sensiblement parallèle audit axe (8) afin d'entourer lesdites ailes (27).

8. Bras de raccordement selon la revendication 7, **caractérisé en ce que** ladite interface (11) comprend en outre une pluralité de broches (34) qui font saillie à partir d'un bord d'extrémité de ladite paroi latérale (33) dans des directions sensiblement parallèles audit axe (8).

9. Bras de raccordement selon la revendication 8, **caractérisé en ce que** ladite interface (11) comprend en outre une dent de retenue angulaire (36) qui fait axialement saillie dudit bord d'extrémité dans une direction sensiblement parallèle audit axe (8) selon une longueur plus longue que la saillie desdites broches (34).

10. Dispositif de raccordement (1) pour raccorder un rétroviseur (2) à un pare-brise (3) comprenant :
- un élément de support (4) comprenant une plaque (5) adaptée pour être fixée sur une surface interne (6) dudit pare-brise (3) et une broche (7) qui fait saillie de ladite plaque (5) le long d'un axe (8) sensiblement orthogonal à ladite plaque (5) et a un profil comprenant une pluralité de lobes (9) ; et
- un bras de raccordement (10) réalisé selon l'une quelconque des revendications précédentes.
